Europäisches Patentamt

**European Patent Office**

Office européen des brevets

(11) Numéro de publication: **0 070 757**
**A1**

## DEMANDE DE BREVET EUROPEEN

(21) Numéro de dépôt: **82401246.2**

(51) Int. Cl.³: **F 24 J 3/02**

(22) Date de dépôt: **02.07.82**

(30) Priorité: **15.07.81 FR 8113789**

(43) Date de publication de la demande: **26.01.83**
**Bulletin 83/4**

(84) Etats contractants désignés: **AT BE CH DE FR GB IT LI LU NL SE**

(71) Demandeur: **CENTRE NATIONAL D'ETUDES SPATIALES, 129, Rue de l'Université, F-75007 Paris (FR)**

(72) Inventeur: **Legendre, Albert Louis, 11, Avenue du Lauragais, F-31400 Toulouse (FR)**

(74) Mandataire: **De Boisse, Louis, 37, Avenue Franklin D. Roosevelt, F-75008 Paris (FR)**

(54) **Capteur solaire modulaire souple.**

(57) Capteur solaire modulaire composé de trois éléments indépendants superposables: un élément à effet de serre (1) constitué de deux feuilles de matière plastique souple et transparente soudées sur les bords et transversalement de manière à former des compartiments communicants, un élément absorbant (2) constitué de deux feuilles imperméables en un matériau souple à coefficient d'absorption élevé du rayonnement solaire soudées sur les bords et transversalement pour former un circuit dans lequel est susceptible de circuler le fluide caloporteur, et un élément d'isolation (3) constitué d'une feuille réfléchissante, chacun des éléments portant sur les bords des oeillets (6, 12, 13) susceptibles de recevoir des moyens de fixation.

1

## Capteur solaire modulaire souple.

L'invention concerne un capteur solaire modulaire souple comportant au moins un circuit de canaux formés de deux feuilles souples fixées de manière étanche par leurs bords ainsi que suivant des lignes pour former un circuit dans lequel circule un fluide caloporteur.

On connaît des chauffe-eau solaires gonflables et pliables, tels que décrits, par exemple, dans le brevet français N° 2.406.786. Généralement, ces chauffe-eau sont constitués d'un film plastique transparent soudé sur le pourtour d'un circuit de canaux formés de deux feuilles souples en un matériau opaque et sombre dans lequel circule l'eau à chauffer. Une troisième feuille, soudée au-dessous du circuit et à son pourtour, assure l'isolation par rapport au support. Les espaces compris entre le film transparent et le circuit de canaux ainsi qu'entre celui-ci et la feuille isolante, sont gonflés d'air. Ces capteurs sont aisément transportables une fois vidés, mais la tenue mécanique des feuilles extérieures est faible si elles ne sont pas maintenues de place en place sur le circuit de canaux. Le brevet français N° 2.457.449 montre un capteur souple d'une constitution semblable à celle précédemment décrite, mais dans lequel les feuilles supérieure et inférieure sont reliées par des bandes souples à l'enveloppe du circuit.

La construction de ce capteur est relativement compliquée, car les bandes doivent être au moins partiellement soudées sur l'élément absorbant déjà partagé par les lignes de soudure formant le circuit du fluide caloporteur. En outre, si l'une des enveloppes extérieures vient à être percée, les autres éléments ne sont plus utilisables. Ces capteurs monoblocs ne peuvent s'adapter aux multiples exigences de la récupération de l'énergie solaire, telle que, par exemple, le réchauffage et la couverture des piscines qui ne nécessitent que le film transparent et/ou l'élément absorbant.

Le capteur selon l'invention évite les inconvénients ci-dessus mentionnés et se présente sous forme d'éléments séparés assemblables.

Les explications et figure données ci-après à titre d'exemple permettront de comprendre comment l'invention peut être réalisée.

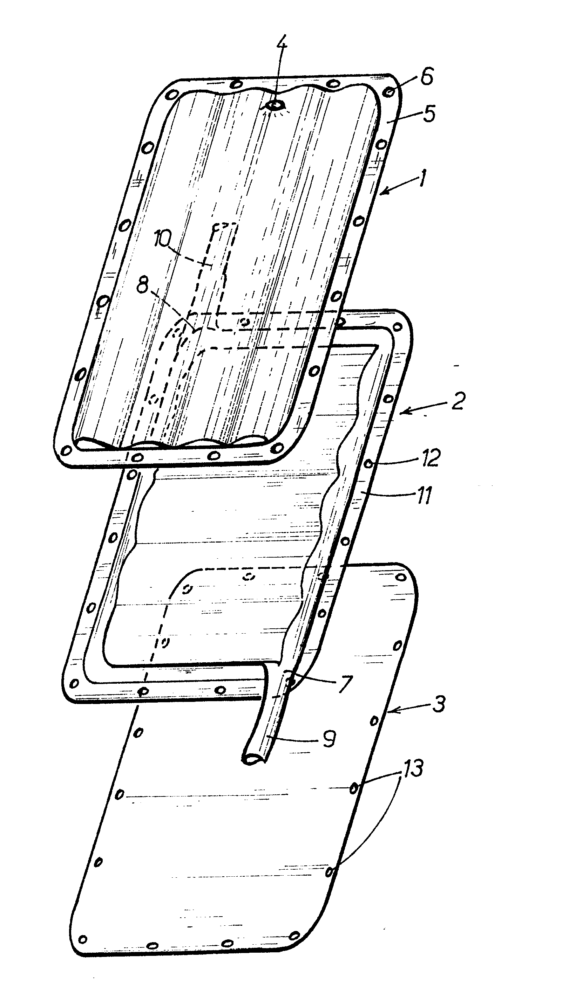

La figure unique montre une vue éclatée du capteur solaire selon l'invention. Le capteur est formé de trois éléments : un élément à effet de serre 1, un élément absorbant à circuit d'eau 2 et un élément isolant 3.

L'élément 1 à effet de serre est constitué de deux feuilles rectangulaires en matière plastique transparente souple assemblées par leur pourtour et transversalement de manière à former des compartiments communicants. L'assemblage est obtenu par tout moyen connu, tel que soudage, collage, etc... Dans la suite de la description, on se référera au soudage sans pour cela éliminer les autres procédés. Il est prévu dans un des compartiments une valve de gonflage 4. Le pourtour soudé forme une bordure 5 qui peut être renforcée par une bande de tissu ou une cordelette. Des oeillets 6 de fixation sont répartis sur les bordures.

L'élément absorbant 2 à circuit d'eau est formé, selon un exemple de réalisation, par deux feuilles imperméables de toile plastifiée ou de plastique souple présentant un coefficient d'absorption important pour le rayonnement solaire. Pratiquement, les toiles et/ou leur plastifiant sont choisis de couleur sombre. Les feuilles sont soudées sur leur pourtour et transversalement de manière à former une circulation du type Tichelmann. Les deux extrémités diagonales 7 et 8 sont prévues de manière à former par soudure des manches 9 et 10 permettant leur raccordement sur un circuit d'eau par des colliers. L'élément 2 présente des dimensions semblables à celles de l'élément 1 et le pourtour soudé 11 est renforcé et reçoit des oeillets 12 disposés de manière identique à ceux de l'élément 1.

L'élément 3 d'isolation est constitué d'une toile aluminisée, réfléchissante, dont les bordures sont munies d'oeillets 13 disposés de manière identique à ceux des éléments précédents.

Selon l'usage auquel on destine le capteur solaire, on emploiera un, deux ou les trois éléments. Par exemple, dans le cas du chauffage de piscine qui ne nécessite que de l'eau à basse température, on n'utilisera pas l'élément à effet de serre 1. Suivant l'état du sol, on utilisera ou non l'élément réfléchissant 3. Les deux éléments choisis seront superposés de manière que les oeillets soient alignés pour recevoir des moyens de fixation au sol.

L'élément absorbant sera raccordé à la sortie de la pompe d'alimentation et déversera directement l'eau chauffée dans la piscine.

Si l'on désire de l'eau à haute température, on utilisera

4

les trois éléments superposés. Le capteur sera utilisé, par exemple, en installation provisoire pour le camping caravaning, ou en installation permanente sur un toit pour l'obtention d'eau chaude sanitaire.

Parmi les avantages que présente un tel capteur modulaire souple, il faut citer :

- sa facilité de transport : les matériaux souples qui le constituent sont facilement pliables sous un volume restreint;

- sa mise en oeuvre aisée et adaptable au problème à résoudre par emploi d'au moins un des éléments;

- la facilité de remplacement d'un élément endommagé;

- son faible prix de revient.

Le capteur selon l'invention constitue un ensemble modulaire. Plusieurs capteurs peuvent être associés en série ou en parallèle et couvrir toute surface désirée. Les capteurs modulaires sont maintenus entre eux et sur la surface support par les oeillets prévus sur leurs bords.

## REVENDICATIONS DE BREVET

1. Capteur solaire modulaire souple comportant au moins un circuit de canaux formés de deux feuilles souples fixées de manière étanche par leur bords ainsi que suivant des lignes pour former un circuit dans lequel circule un fluide caloporteur, caractérisé en ce qu'il se compose de trois éléments indépendants superposables: un élément à effet de serre (1) constitué de deux feuilles de matière plastique souple et transparente soudées sur les bords et transversalement de manière à former des compartiments communicants, un élément absorbant (2) constitué de deux feuilles imperméables en un matériau souple à coefficient d'absorption élevé du rayonnement solaire soudées sur les bords et transversalement pour former un circuit dans lequel est susceptible de circuler le fluide caloporteur, et un élément d'isolation (3) constitué d'une feuille réfléchissante, chacun des éléments portant sur les bords des oeillets (6, 12, 13) susceptibles de recevoir des moyens de fixation.

2. Capteur selon la revendication 1, caractérisé en ce que l'élément absorbant (2) présente à deux extrémités diagonales des manches (9, 10) pour l'entrée et la sortie du fluide caloporteur, formées à partir des feuilles le constituant.

3. Capteur selon la revendication 1 ou 2, caractérisé en ce que l'élément isolant (3) est aluminisé.

4. Capteur selon une des revendications 1 à 3, caractérisé en ce qu'au moins chaque élément (1, 2, 3) porte une bordure (5, 11) renforcée dans laquelle sont fixés les oeillets (6, 12, 13).

5. Capteur selon la revendication 4, caractérisé en ce que les oeillets (6, 12, 13) de chaque élément sont prévus pour se présenter en face les uns des autres lorsque les éléments sont superposés.

0070757

1 — 1

Office européen
des brevets

**RAPPORT DE RECHERCHE EUROPEENNE**

Numéro de la demande

EP 82 40 1246

| | **DOCUMENTS CONSIDERES COMME PERTINENTS** | | |
|---|---|---|---|
| Catégorie | Citation du document avec indication, en cas de besoin, des parties pertinentes | Revendication concernée | CLASSEMENT DE LA DEMANDE (Int. Cl. 3) |
| Y | FR-A-2 438 242 (SHELL)<br><br>*En entier*<br><br>--- | 1,2,4, 5 | F 24 J 3/02 |
| Y | WO-A-8 000 487 (NIGG)<br>*Page 4, dernier paragraphe; page 5, premier paragraphe*<br><br>--- | 1,2 | |
| A | FR-A-2 280 867 KLEINWACHTER)<br>*Page 2, lignes 31,32*<br><br>--- | 3 | |
| A | DE-A-2 700 714 (BOETTCHER)<br><br>----- | | |

**DOMAINES TECHNIQUES
RECHERCHES (Int. Cl. 3)**

F 24 J

Le présent rapport de recherche a été établi pour toutes les revendications

| Lieu de la recherche | Date d'achèvement de la recherche | Examinateur |
|---|---|---|
| LA HAYE | 18-10-1982 | SMETS E.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503 03.82